# EUROPÄISCHE PATENTANMELDUNG

(11) **EP 2 620 646 A1**
(43) Veröffentlichungstag der Anmeldung: **31.07.2013**
(21) Anmeldenummer: 09008160.5
(22) Anmeldetag: 22.06.2009
(51) Int. Cl.: F04B 13/00, G01F 11/02, B67D 1/12

(54) **Vorrichtung zum Portionieren förderbarer Medien**

(30) Priorität: 30.06.2008 DE 102008031049
(71) Anmelder: LEWA GmbH, 71229 Leonberg (DE)
(72) Erfinder: Rißmann, Uwe, 73240 Wendlingen (DE)
(74) Vertreter: Volpert, Marcus

(57) **Zusammenfassung**

1. Vorrichtung zum Portionieren förderbarer Medien, insbesondere zum Erzeugen von Flüssigkeitsportionen für Abfüllvorgänge in Verpackungen.
2.1. Üblicherweise kommen bei Abfüllvorgängen Vorrichtungen zum Portionieren zum Einsatz, bei denen das genaue Portioniervolumen mittels eines Hubzylinders mit Hilfe beispielsweise von Kurvenscheiben bestimmt wird. Das förderbare Medium wird dem Portionierzylinder mittels einer kontinuierlich arbeitenden Pumpe zugeführt, wobei zum diskontinuierlichen Befüllen von Gebinden zusätzliche Elemente, wie zum Beispiel ein Druckspeicher, vorzusehen sind. Die neue Vorrichtung soll wirtschaftlicher handhabbar sein.
2.2. Die erfindungsgemäße Vorrichtung (1) hat eine Verdrängerpumpe (3) mit einem Antrieb (4), welcher ein hochdynamischer Antrieb mit präziser Positioniereinrichtung (5) ist. Vorzugsweise ist der Antrieb (4) ein Servomotor mit integrierter Positionsrückmeldung.
2.3. Portionieren bzw. Dosieren förderbarer Medien, insbesondere zum Erzeugen von Flüssigkeitsportionen für Abfüllvorgänge.

## Beschreibung

Die Erfindung bezieht sich auf eine Vorrichtung zum Portionieren förderbarer Medien, insbesondere zum Erzeugen von Flüssigkeitsportionen für Abfüllvorgänge in Verpackungen, mittels einer einen Antrieb aufweisenden Verdrängerpumpe nach dem Oberbegriff des Patentanspruchs 1.

Üblicherweise kommen zum Portionieren von Flüssigkeiten bei Abfüllvorgängen Vorrichtungen zum Einsatz, die das exakte Volumen der Fördermenge mittels eines Hubzylinders erzeugen. Ein derartiger Hubzylinder wird beispielsweise über sogenannte Kurvenscheiben (servo-)pneumatisch oder (servo-)hydraulisch angetrieben. Das zu fördernde Medium, beispielsweise eine Flüssigkeit, wird dem Portionierzylinder mittels einer Pumpe, üblicherweise einer rotierenden oder oszillierenden Verdrängerpumpe, zugeführt. Da eine solche Pumpe kontinuierlich arbeitet und somit einen konstanten Förderstrom erzeugt, sind beispielsweise bei einem diskontinuierlichen Befüllen einzelner Verpackungen, wie zum Beispiel einzelner Gebinde, zusätzliche Elemente, wie zum Beispiel ein Druckspeicher, vorzusehen, die die nicht konstante Abnahmemenge der Befüllvorrichtung kompensieren.

Derartige Vorrichtungen und eine wie zuvor beschriebene Handhabung derartiger Geräte sind in der Praxis weit verbreitet und erprobt. Allerdings sind zum Abfüllen bestimmter Portionen zusätzliche Komponenten erforderlich. Bei erforderlichen Reinigungsvorgängen, insbesondere bei einem Wechsel von einem Medium zu einem anderen, ist bei den bekannten Vorrichtungen allerdings mit einem erheblichen Reinigungsaufwand zu rechnen. Insbesondere der Abfüllzylinder, der Druckspeicher, etwaige Schaltventile zum Umschalten des zu fördernden Mediums auf beispielsweise eine Reinigungsflüssigkeit und Rohrleitungsbauteile sind mit dem zu fördernden Medium in Kontakt und vor einem Wechseln des zu fördernden Mediums zu reinigen, gegebenenfalls auch zu sterilisieren.

Der Erfindung liegt die Aufgabe zugrunde, eine Vorrichtung der eingangs erwähnten Art zu schaffen, welche wirtschaftlicher handhabbar ist.

Diese Aufgabe wird erfindungsgemäß durch eine Vorrichtung mit den Merkmalen des Patentanspruchs 1 gelöst. Vorteilhafte Weiterbildungen sind Gegenstand der Unteransprüche.

Erfindungsgemäß ist der Antrieb der Verdrängerpumpe ein hochdynamischer Antrieb mit präziser Positioniereinrichtung. Damit lässt sich ein entscheidender Vorteil der Erfindung realisieren, welcher darin besteht, dass die Funktionen "Förderung des Mediums" und "Portionierung des Mediums" mit Hilfe einer einzigen Komponente, und zwar mit einer speziell ausgebildeten Verdrängerpumpe, realisierbar sind.

Vorzugsweise ist der Antrieb ein Servomotor mit integrierter Positionsrückmeldung. Dadurch ist es möglich, die Verdrängerpumpe sehr präzise zu starten und anzuhalten.

Gemäß einer besonders bevorzugten Weiterbildung der Erfindung ist das Volumen der jeweiligen Fördermenge über den Pumpendrehwinkel, vorzugsweise mittels einer programmierbaren Steuerung, steuerbar. Dadurch bietet sich die Möglichkeit, auf den im Stand der Technik erforderlichen Abfüllzylinder zu verzichten. Somit kann auch der Druckspeicher entfallen, da der mittels der Pumpe bereitgestellte Volumenstrom nicht mehr konstant zu sein braucht. Die Verdrängerpumpe ist somit in der Lage, diskontinuierlich zu arbeiten. Auch Schaltventile und die damit in Verbindung stehenden Rohrleitungsteile werden nicht länger benötigt, da die Reinigung mit der Verdrängerpumpe über die Rohrleitung selbst erfolgen kann.

Vorteilhafterweise ist mittels der Steuerung das Förderprofil der Pumpe in weiten Grenzen einstell- und variierbar, wodurch vorzugsweise eine schonende Förderung des Mediums gestattet ist. Dies ist insbesondere durch spezielle Anfahrprofile möglich, wie nachstehend noch erläutert wird.

Gemäß einer anderen Ausführungsform der Erfindung ist das Förderprofil derart einstellbar, dass die Füllgeschwindigkeit in der Verpackung konstant ist. Bei dieser Ausführungsform der Erfindung ist daher der Volumenstrom des zu fördernden Mediums dem veränderlichen Querschnitt der Verpackung, beispielsweise einer Flasche mit kegelförmigem Oberteil, angepasst.

Vorteilhafterweise ist der Antrieb der Verdrängerpumpe, vorzugsweise der Start zum Portionieren, mittels eines externen Signals steuerbar. Vorteilhaft ist dabei, dass der Takt der Abfüllung beispielsweise von einer übergeordneten Abfüllanlage vorgegeben sein kann und die Pumpensteuerung immer dann ein Signal erhält, wenn der Abfüllvorgang erfolgen kann.

Gemäß einer anderen Weiterbildung der Erfindung ist der Antrieb der Verdrängerpumpe derart steuerbar, dass das Volumen der jeweiligen Fördermenge unabhängig von der Stellung der Pumpe konstant ist und/oder der Volumenstrom der jeweiligen Fördermenge während der Portionierung konstant ist. Die Steuerung ist damit derart ausgebildet, dass die üblicherweise nicht konstant ausgeführten Drehwinkel aus der Kenntnis über den Verlauf des geförderten Volumenstroms in Abhängigkeit von der Stellung der Pumpe bestimmt werden. Im Falle eines konstanten Volumenstroms der jeweiligen Fördermenge während der Positionierung wird die Winkelgeschwindigkeit des Pumpenantriebs entsprechend geregelt.

Gemäß einer ferner bevorzugten Weiterbildung der Erfindung ist der Antrieb der Verdrängerpumpe vorwärts und rückwärts und vorzugsweise derart steuerbar, dass am Ende jeder Portionierung eine Rückförderung stattfindet, wobei das Volumen der jeweiligen Rückförderung sehr klein, bevorzugt < 1 %, bezogen auf das Volumen der jeweiligen Fördermenge, ist. Diese Weiterbildung hat den Vorteil, dass ein Abtropfen des zu fördernden Mediums, also beispielsweise einer Flüssigkeit, beim Verpackungswechsel, beispielsweise einem Gebindewechsel, verhindert ist. Dabei wird das Volumen der jeweiligen Fördermenge um den Betrag des Volumens der jeweiligen Rückförderung erhöht. Diese Weiterbildung bietet aber auch beim Reinigen der Vorrichtung Vorteile, da das Volumen der Reinigungsflüssigkeit beim Durchspülen mit Vorwärts- und Rückwärtsdrehungen reduziert werden kann. Dies kann auch positive Auswirkungen auf die erforderliche Reinigungszeit haben.

Ausführungsbeispiele des Erfindungsgegenstandes werden nachfolgend anhand der Zeichnung näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Es zeigen:
- Fig. 1: eine schematische Darstellung einer Vorrichtung zum Portionieren förderbarer Medien;
- Fig. 2: ein schematisches Schaubild, bei welchem die Winkelgeschwindigkeit über der Zeit bzw. über dem Drehwinkel aufgetragen ist;
- Fig. 3: ein schematisches Schaubild, bei dem im oberen Teil die Winkelgeschwindigkeit über der Zeit und dem Drehwinkel und im unteren Teil ein Signal über der Zeit aufgetragen ist;
- Fig. 4: eine schematische Darstellung, bei der der geförderte Volumenstrom über der Zeit aufgetragen ist;
- Fig. 5: eine schematische Darstellung, bei welcher im oberen Teil die Winkelgeschwindigkeit über der Zeit und dem Drehwinkel, im mittleren Teil der geförderte Volumenstrom über der Zeit und im unteren Teil das Portioniervolumen über der Zeit aufgetragen ist;
- Fig. 6: eine schematische Darstellung, bei der im oberen Teil die Winkelgeschwindigkeit über der Zeit und dem Drehwinkel, im mittleren Teil der Volumenstrom über der Zeit und im unteren Teil das Portioniervolumen über der Zeit aufgetragen ist;
- Fig. 7: eine schematische Darstellung, bei der der Volumenstrom über der Zeit aufgetragen ist;
- Fig. 8: eine schematische Darstellung, bei der im oberen Teil der Volumenstrom über der Zeit und im unteren Teil die Füllgeschwindigkeit über der Zeit aufgetragen ist;
- Fig. 9: eine schematische Vorderansicht einer Verpackung in Form eines flaschenförmigen Gebindes; und
- Fig. 10: eine schematische Darstellung, bei der der Volumenstrom über der Zeit und dem Drehwinkel aufgetragen ist.

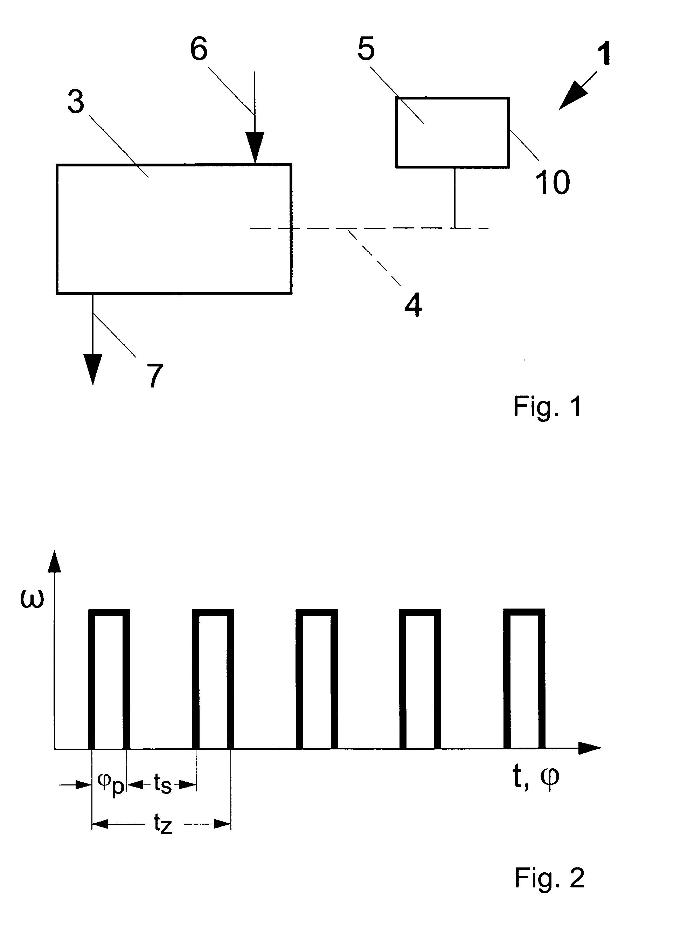

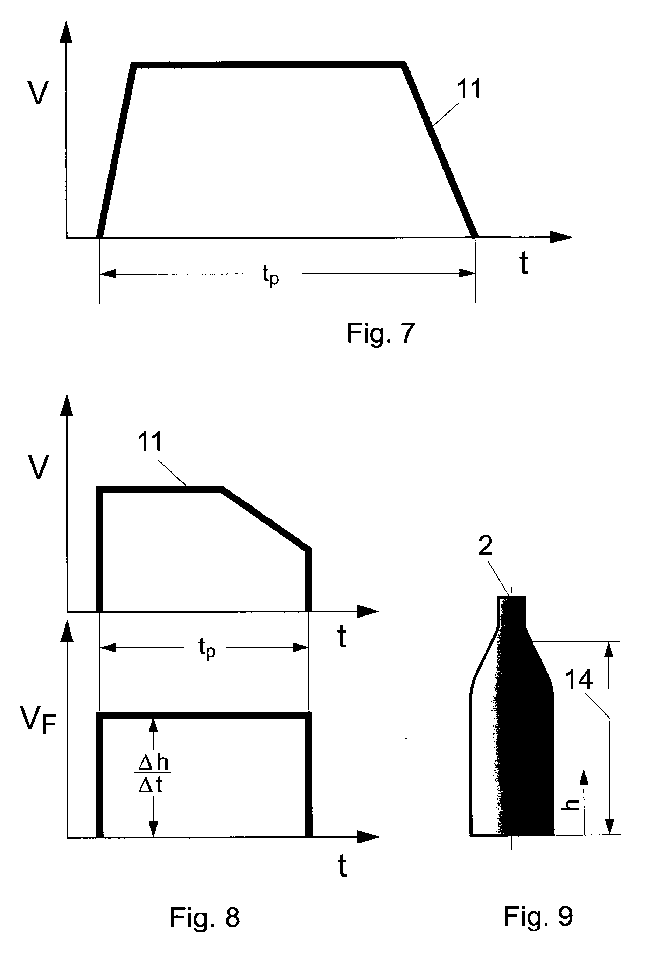

Eine Vorrichtung 1 zum Portionieren förderbarer Medien, insbesondere zum Erzeugen von Flüssigkeitsportionen für Abfüllvorgänge in Verpackungen 2 (siehe Fig. 9), ist schematisch und stark vereinfacht in Fig. 1 dargestellt. Es ist klar, dass sich die gesamte Vorrichtung 1 in einem einzigen Gehäuse befinden kann. Das förderbare Medium ist beispielsweise jedoch nicht ausschließlich eine Flüssigkeit. Zur Anwendung können dünn- bis zähflüssige Flüssigkeiten, wie z.B. Pasten, Cremes oder dgl., kommen.

Die Vorrichtung 1 hat eine Verdrängerpumpe 3, welche beispielsweise als rotierende Verdrängerpumpe oder auch als oszillierende Verdrängerpumpe ausgebildet ist. Die Verdrängerpumpe 3 hat einen Antrieb 4, welcher in Fig. 1 rein schematisch gestrichelt dargestellt ist. Der Antrieb 4 der Verdrängerpumpe 3 ist ein hochdynamischer Antrieb mit präziser Positioniereinrichtung 5. Es ist klar, dass letztere mit dem Antrieb 4 verbunden ist, wie dies in Fig. 1 schematisch gezeigt ist. Gemäß einer bevorzugten Ausführungsform der Erfindung ist der Antrieb 4 ein Servomotor mit integrierter Positionsrückmeldung. Die Positionsrückmeldung ist also in den Servomotor eingebaut. Mit der Verdrängerpumpe 3 ist eine Eintrittsleitung 6 und eine Austrittsleitung 7 für das zu fördernde Medium verbunden. Die Eintrittsleitung 6 ist mit einem nicht näher gezeigten Speicher für das förderbare Medium, wie zum Beispiel einer Flüssigkeit, verbunden. Durch die Austrittsleitung 7 strömt das geförderte Volumen, insbesondere das Portioniervolumen V_{P}. Das Portioniervolumen gelangt üblicherweise in eine Verpackung 2, wie sie beispielhaft in Form eines Gebindes in Fig. 9 gezeigt ist.

Das Volumen V_{P} der jeweiligen Fördermenge, also das Portioniervolumen, ist über den Pumpendrehwinkel ϕ, vorzugsweise mittels einer programmierbaren Steuerung 10, steuerbar. Anders als in Fig. 1 gezeigt, kann die programmierbare Steuerung 10 auch getrennt von der Positioniereinrichtung 5 vorgesehen und ausgebildet sein. Der Pumpendrehwinkel bezeichnet denjenigen Winkel, über den das nicht näher gezeigte Förderorgan der Verdrängerpumpe weiterbewegt, insbesondere weiter rotiert worden ist.

Mittels der Steuerung 10 ist das beispielhaft in den Fig. 7, 8 und 10 gezeigte Förderprofil 11 der Pumpe 3 in weiten Grenzen einstell- und variierbar. Damit lässt sich ein vom Benutzer der Vorrichtung gewünschtes und durch diesen definiertes Förderprofil mit der erfindungsgemäßen Vorrichtung realisieren. Hierdurch ist es beispielsweise möglich, den Volumenstrom zu Beginn linear bis zu einem Maximum zu erhöhen und gegen Ende hin linear bis auf Null abzusenken. Somit können beispielsweise Druckstöße in den zu- und abführenden Leitungen vermieden werden.

Sofern gewünscht, ist das Förderprofil 11 derart einstellbar, dass die Füllgeschwindigkeit Δh/Δt in der Verpackung 2 konstant ist. Trotz beispielsweise eines veränderten Querschnitts des Gebindes lässt sich damit eine konstante Füllgeschwindigkeit erreichen.

Gemäß einer bevorzugten Ausführungsform der Erfindung ist der Antrieb 4 der Verdrängerpumpe 3, vorzugsweise der Start zum Portionieren des förderbaren Mediums, mittels eines externen Signals S steuerbar. Dieses Signal kann beispielsweise von einer nicht näher gezeigten Abfüllanlage vorgegeben werden. Gemäß einer anderen Ausführungsform der Erfindung ist der Antrieb 4 der Verdrängerpumpe 3 derart steuerbar, dass das Volumen V_{P} der jeweiligen Fördermenge unabhängig von der Stellung der Pumpe konstant ist und/oder der Volumenstrom V_{F} der jeweiligen Fördermenge während der Portionierung konstant ist. Erfindungsgemäß werden die auszuführenden Drehwinkel nicht konstant realisiert, sondern aus der Kenntnis über den Volumenstromverlauf in Abhängigkeit von der Stellung der Pumpe bestimmt, so dass die Positioniermenge unabhängig von der Stellung der Pumpe konstant bleiben kann. Es ist ferner möglich, die Winkelgeschwindigkeit ω so zu regeln, dass der Volumenstrom während der Portionierung konstant bleibt.

Gemäß einer besonders bevorzugten Ausführungsform der Erfindung ist der Antrieb 4 der Verdrängerpumpe 3 vorwärts und rückwärts und vorzugsweise derart steuerbar, dass am Ende jeder Portionierung eine Rückförderung stattfindet, wobei das Volumen V_{R} der jeweiligen Rückförderung sehr klein, bevorzugt < 1 %, bezogen auf das Volumen V_{P}, also das Portioniervolumen, der jeweiligen Fördermenge ist. Eine derart kurze Rückförderphase verhindert ein Abtropfen des Mediums, beispielsweise einer Flüssigkeit, beim Gebindewechsel.

Nachfolgend wird die Arbeitsweise der erfindungsgemäßen Vorrichtung beispielhaft anhand bestimmter Ausführungsformen mit Bezug auf die Fig. 2 bis 10 näher erläutert.

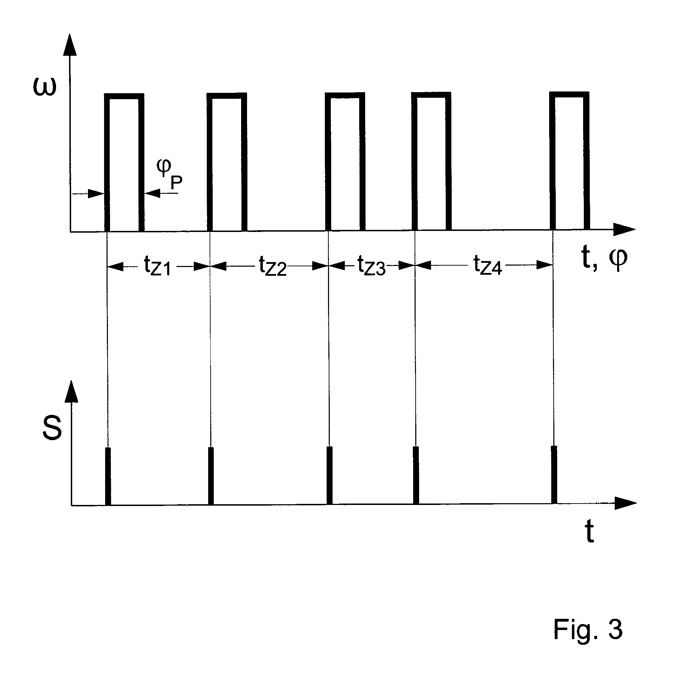

In Fig. 2 ist schematisch die Winkelgeschwindigkeit ω des Antriebs 4 über der Zeit t bzw. über dem Pumpendrehwinkel ϕ aufgetragen. Zu vorgegebenen Zeiten werden Portionen erzeugt, indem die Pumpe mit einer definierten Winkelgeschwindigkeit um einen definierten Drehwinkel bewegt wird. Dabei kann für den Start der Portionierung entweder eine Zykluszeit oder eine Pausenzeit vorgegeben werden. In Fig. 2 ist der Drehwinkel ϕ_{P} pro Portioniervorgang ebenso eingezeichnet wie die Zykluszeit t_{Z} und die Stillstandszeit t_{S}. Anders als in Fig. 2 dargestellt, können die einzelnen Zykluszeiten t_{Z1} bis t_{Z4} auch unterschiedlich bemessen sein, wie dies beispielhaft in Fig. 3 schematisch dargestellt ist. Der Start der Portionierung wird gemäß Fig. 3, wie dort im unteren Teil gezeigt, durch ein externes Signal S vorgegeben. Die Zykluszeit kann, wie gezeigt, von Zyklus zu Zyklus variieren. Es ist klar, dass die Zykluszeit t_{Z} auch konstant sein kann, wie dies in Fig. 2 verdeutlicht ist.

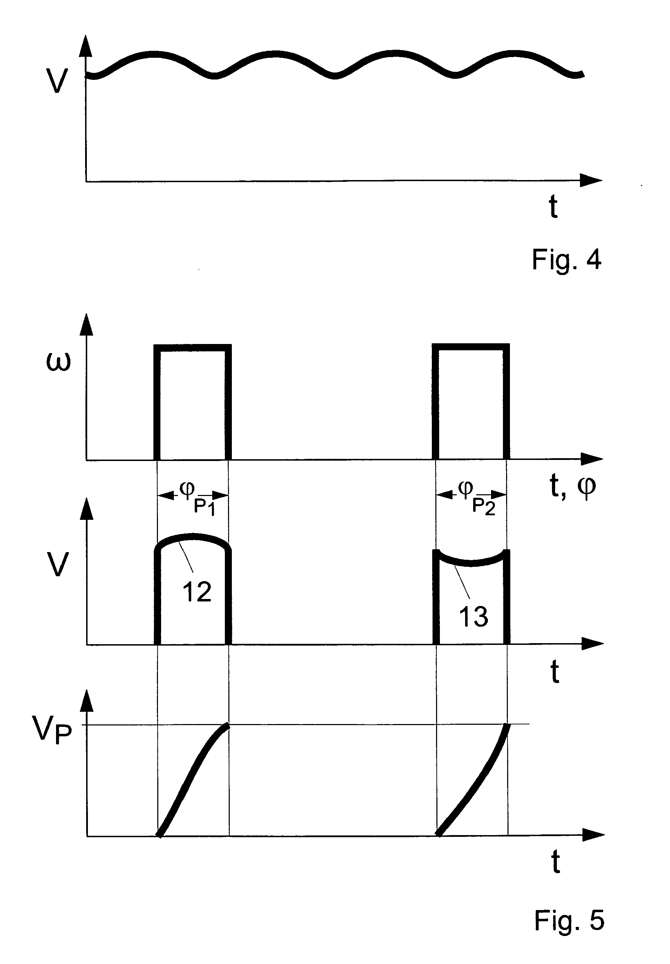

Fig. 4 zeigt den geförderte Volumenstrom V aufgetragen über der Zeit t und stellt damit einen typischen Förderstromverlauf einer rotierenden Verdrängerpumpe in Abhängigkeit vom Drehwinkel dar. Daraus folgt, dass das geförderte Volumen über die Zeit betrachtet schwankt und insofern nicht konstant ist. Um die sich daraus ergebenden unterschiedlichen Portionsvolumina trotzdem konstant zu halten, werden die Drehwinkel ϕ_{P} nicht konstant ausgeführt, sondern erfindungsgemäß aus der Kenntnis über den Förderstromverlauf in Abhängigkeit von der Stellung des Antriebs der Pumpe so berechnet, dass das Portioniervolumen V_{P} unabhängig von der Stellung der Pumpe ist und damit konstant bleibt, wie dies in Fig. 5 im unteren Teil gezeigt ist. Dabei ergibt sich infolge des im mittleren Teil der Fig. 5 gezeigten Wellenberges 12 des Volumenstroms im unteren Teil der Fig. 5 ein leicht nach oben hin ausgebauchter Verlauf des Portioniervolumens V_{P} und im Falle eines Wellentales 13 in Bezug auf den Volumenstrom V (siehe Fig. 5, mittlere Darstellung rechts) ein leicht nach unten hin ausgebauchter Verlauf des Positioniervolumens V_{P} (siehe Fig. 5, untere Darstellung rechts).

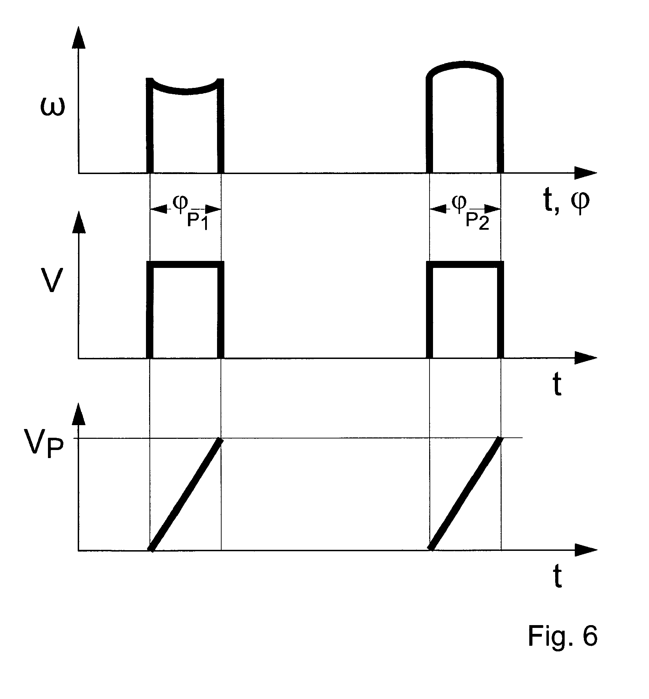

Sofern zusätzlich noch die Winkelgeschwindigkeit ω so geregelt wird, dass der geförderte Volumenstrom V während der Portionierung konstant bleibt, ergibt sich der in Fig. 6 gezeigte Verlauf mit über die Zeit t konstantem Volumenstrom V (siehe Fig. 6, mittlere Darstellung). Dadurch ergibt sich ferner ein linearer Verlauf des Portioniervolumens V_{P} über der Zeit, wie dies in Fig. 6 im unteren Teil dargestellt ist.

Fig. 7 zeigt ein speziell definiertes Förderprofil 11, bei welchem der Volumenstrom V zu Beginn linear bis zu einem Maximum erhöht wird und gegen Ende hin linear bis auf Null abfällt. Die Steigung zu Beginn und der Abfall gegen Ende hin können, wie Fig. 7 zeigt, unterschiedlich stark ausgebildet sein. Dabei bezeichnet t_{P} die Portionierzeit.

In Fig. 8 ist im oberen Teil ein Förderprofil 11 gezeigt, das zu einer konstanten Füllgeschwindigkeit v_{F} in einer Verpackung 2 führt, wie sie beispielhaft in Fig. 9 gezeigt ist. In Fig. 9 verdeutlicht h die Förderhöhe und das Bezugszeichen 14 den gesamten Füllbereich.

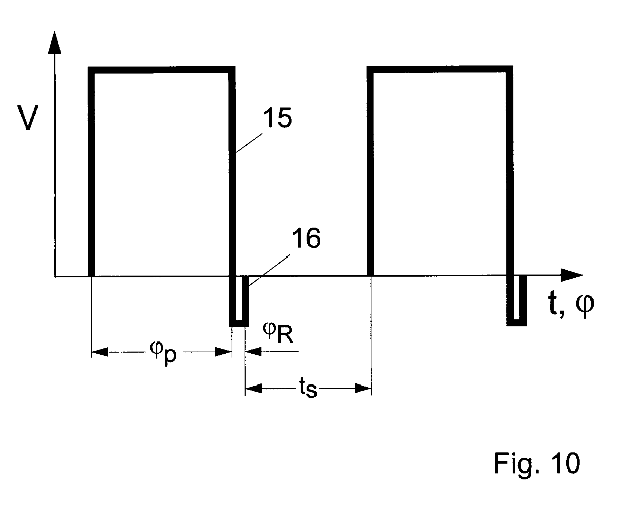

Eine bevorzugte Vorgehensweise beim Betreiben der erfindungsgemäßen Vorrichtung ist in Fig. 10 schematisch gezeigt. Hier ist der Volumenstrom V über der Zeit t bzw. über dem Pumpendrehwinkel ϕ dargestellt. Am Ende jeder Portionierung 15 wird eine kurze Rückförderung 16 eingeleitet, wobei vorzugsweise die Portionierung 15 um den Betrag der Menge der Rückförderung 16 erhöht worden ist, damit das Portioniervolumen V_{P} exakt und in gewünschter Höhe abgegeben werden kann. Dem Pumpendrehwinkel ϕ_{P} bei der Portionierung entspricht dabei der rückwärts gewandte Pumpendrehwinkel ϕ_{R} im Falle der Rückförderung.

Neben Abfüllvorgängen kann die erfindungsgemäße Vorrichtung auch für andere Vorgänge zum Einsatz kommen, die einen gewissen Takt erfordern, zum Beispiel Sprühvorgänge beim Beschicken von Keksen mit Schokolade oder die Dosierung von Chargen. Die Stillstandszeit zwischen einzelnen Zyklen und/oder die Zeit für die Portionierung ist wie vom Benutzer gewünscht veränderbar. Die kurze Rückförderung am Ende des Füllvorgangs soll ein Abtropfen an einer nicht näher gezeigten Fülllanze während eines Gebindewechsels vermeiden. Bei rotierenden Verdrängerpumpen wird zum Durchführen der Rückförderung die Drehrichtung der Pumpe während dieser Zeit umgekehrt. Dadurch werden an der Fülllanze hängende Tropfen in die Lanze zurückgezogen. Wie zuvor erwähnt, kann erfindungsgemäß das vom Drehwinkel abhängige geförderte Volumen für die Portionierung berücksichtigt werden.

Alle Verdrängerpumpen haben eine mehr oder weniger starke Förderstrompulsation, d.h. die Fördermenge verändert sich in Abhängigkeit vom Drehwinkel der Pumpe. Eine derartige Pulsation hängt vom Konstruktionsprinzip der Pumpe ab. Durch Hinterlegen der Förderstromcharakteristik in der Steuerung 10 kann die Genauigkeit der Portionierung erhöht werden, indem pro Portion nicht ein konstanter Drehwinkel der Pumpe vorgegeben wird, sondern der erforderliche Drehwinkel jeweils errechnet und damit individuell bestimmt wird. Es ist auch möglich, die vom Förderdruck abhängige Fördermenge für die Portionierung zu berücksichtigen. Durch eine in der Steuerung hinterlegte Druckabhängigkeit wird die bei zunehmendem Druck abnehmende Fördermenge korrigiert, indem die Steuerung den Drehwinkel pro Portion vergrößert.

Damit ist eine Vorrichtung zum Portionieren förderbarer Medien, insbesondere zum Erzeugen von Flüssigkeitsportionen für Abfüllvorgänge in Verpackungen, geschaffen, welche besonders wirtschaftlich handhabbar ist.

## Patentansprüche

1. Vorrichtung zum Portionieren förderbarer Medien, insbesondere zum Erzeugen von Flüssigkeitsportionen für Abfüllvorgänge in Verpackungen (2),
mittels einer einen Antrieb (4) aufweisenden Verdrängerpumpe (3),
**dadurch gekennzeichnet,**
**dass** der Antrieb (4) der Verdrängerpumpe (3) ein hochdynamischer Antrieb mit präziser Positioniereinrichtung (5) ist.

2. Vorrichtung nach Anspruch 1, **dadurch gekennzeichnet, dass** der Antrieb (4) ein Servomotor mit integrierter Positionsrückmeldung ist.

3. Vorrichtung nach Anspruch 1 oder 2, **dadurch gekennzeichnet, dass** das Volumen (V_{P}) der jeweiligen Fördermenge über den Pumpendrehwinkel (ϕ), vorzugsweise mittels einer programmierbaren Steuerung (10), steuerbar ist.

4. Vorrichtung nach Anspruch 3, **dadurch gekennzeichnet, dass** mittels der Steuerung (10) das Förderprofil (11) der Pumpe (3) in weiten Grenzen einstell- und variierbar ist und vorzugsweise eine schonende Förderung des Mediums gestattet.

5. Vorrichtung nach Anspruch 4, **dadurch gekennzeichnet, dass** das Förderprofil (11) derart einstellbar ist, dass die Füllgeschwindigkeit (Δh/Δt) in der Verpackung (2) konstant ist.

6. Vorrichtung nach einem der vorhergehenden Ansprüche, **dadurch gekennzeichnet, dass** der Antrieb (4) der Verdrängerpumpe (3), vorzugsweise der Start zum Portionieren, mittels eines externen Signals (S) steuerbar ist.

7. Vorrichtung nach einem der Ansprüche 3 bis 6, **dadurch gekennzeichnet, dass** der Antrieb (4) der Verdrängerpumpe (3) derart steuerbar ist, dass das Volumen (V_{P}) der jeweiligen Fördermenge unabhängig von der Stellung der Pumpe (3) konstant ist und/oder der Volumenstrom (v_{F}) der jeweiligen Fördermenge während der Portionierung konstant ist.

8. Vorrichtung nach einem der vorhergehenden Ansprüche, **dadurch gekennzeichnet, dass** der Antrieb (4) der Verdrängerpumpe (3) vorwärts und rückwärts und vorzugsweise derart steuerbar ist, dass am Ende jeder Portionierung eine Rückförderung stattfindet, wobei das Volumen (V_{R}) der jeweiligen Rückförderung sehr klein, bevorzugt < 1 %, bezogen auf das Volumen (V_{P}) der jeweiligen Fördermenge ist.
